# EUROPÄISCHE PATENTSCHRIFT

(11) **EP 3 382 239 B1**
(45) Veröffentlichungstag und Bekanntmachung des Hinweises auf die Patenterteilung: **30.09.2020**
(21) Anmeldenummer: 18161178.1
(22) Anmeldetag: 12.03.2018
(51) Int. Cl.: F16J 13/12, F16J 15/06, B65D 41/04, B65D 83/00, B65D 47/12, B65D 53/02

(54) **VERSCHLIESSBARE BEHÄLTER-ANORDNUNG**
LOCKABLE CONTAINER ASSEMBLY
SYSTEME DE RÉCIPIENT VERROUILLABLE

(30) Priorität: 27.03.2017 DE 102017205160
(43) Veröffentlichungstag der Anmeldung: 03.10.2018
(73) Patentinhaber: MEDISCA PHARMACEUTIQUE INC., St-Laurent, QC H4R 3A6 (CA)
(72) Erfinder: Schlegel, Sven, 90613 Großhabersdorf (DE)
(74) Vertreter: Rau, Schneck & Hübner Patentanwälte Rechtsanwälte PartGmbB

(56) Entgegenhaltungen:
- EP-A1- 0 417 554
- EP-A1- 2 468 414
- WO-A1-02/087986
- WO-A2-2010/041075
- DE-A1- 4 002 982
- DE-A1- 19 963 218

## Beschreibung

Die vorliegende Patentanmeldung nimmt die Priorität der deutschen Patentanmeldung DE 10 2017 205 160.4 in Anspruch.

Die Erfindung betrifft eine verschließbare Behälter-Anordnung.

Die WO 02/087 986 A1 offenbart einen Behälter mit einer Dichtung am Behälterdeckel. Die Dichtung ist als Dichtungslippe am Deckel angeformt. Weitere Behälter mit Dichtung sind bekannt aus WO 2010/041075 A2, DE 199 63 218 A1, DE 40 02 982 A1, DE 297 06 611 U1, EP 0 417 554 A1 und DE 102 24 369 A1. EP 0 417 554 A1 offenbart eine verschließbare Behälter-Anordnung gemäß dem Oberbegriff des Anspruchs 1.

Es ist eine Aufgabe der vorliegenden Erfindung, die Abdichtung eines Behälterinnenraums einer gattungsgemäßen Behälter-Anordnung zu erhöhen. Diese Aufgabe ist erfindungsgemäß gelöst durch eine verschließbare Behälter-Anordnung mit den im Anspruch 1 angegebenen Merkmalen. Erfindungsgemäß wurde erkannt, dass die Dichtigkeit einer Behälter-Anordnung dadurch verbessert ist, wenn ein Dichtungselement aus einem Dichtungsmaterial verwendet wird, dessen Härte kleiner ist als die Härte eines Behältermaterials eines Behälters und/oder als die Härte eines Deckelmaterials eines Deckels. Die Dichtwirkung ist verbessert. Versuche haben gezeigt, dass das Dichtungselement aus dem weicheren Dichtungsmaterial eine verbesserte Dichtungswirkung insbesondere gegenüber der aus dem Stand der Technik bekannten Dichtungslippe aufweist. Die Dichtungslippe besteht aus demselben Material wie der Deckel und weist eine Strukturflexibilität dadurch auf, dass sie besonders dünn ausgeführt ist. Gegenüber einem Behälter gemäß der WO 02/087 986 A1 ist die Dichtigkeit mehr als verdreifacht und beträgt insbesondere etwa 360 % der Dichtigkeit der Behälter-Anordnung gemäß der WO 02/087 986 A1. Der Behälter weist eine Behälter-Längsachse und ein Behälter-Verbindungselement auf. Der Deckel ist mit dem Behälter verbindbar und weist dazu ein Deckel-Verbindungselement auf, das mit dem Behälter-Verbindungselement korrespondiert. Insbesondere sind die Verbindungselemente als Gewinde ausgeführt, so dass der Deckel vorteilhaft auf den Behälter aufschraubbar ist. Insbesondere ist am Behälter ein Außen-Gewinde und am Deckel ein Innen-Gewinde vorgesehen. Alternativ ist eine Aufschnappverbindung derart denkbar, dass am Behälter ein radial nach außen vorstehender, insbesondere umlaufender Steg angeordnet ist. Entsprechend kann der Deckel ein Hinterschnitt-Element aufweisen, das den umlaufenden Steg am Behälter hintergreift und somit eine zuverlässige Verbindung zwischen Behälter und Deckel gewährleistet.

Weiter ist erfindungsgemäß ein Deckel mit einer umlaufenden Nut vorgesehen, in der das Dichtungselement unverlierbar angeordnet ist. Der Deckel vereinfacht die Montage des Dichtungselements. Das Dichtungselement ist zuverlässig am Deckel angeordnet. Das Risiko, dass das Dichtungselement beim Abnehmen des Deckels vom Behälter verloren geht, ist ausgeschlossen.

Die Ausgestaltung der Nut mit einer Nutbreite, die kleiner oder gleich ist einer Dicke des Dichtungselements, gewährleistet eine zuverlässige Anordnung des Dichtungselements in der Nut. Das Dichtungselement ist unverlierbar in der Nut angeordnet. Beim Öffnen der Behälter-Anordnung und beim Abnehmen des Deckels vom Behälter verbleibt das Dichtungselement am Deckel und wird insbesondere schwerkraftbedingt nicht ausgeworfen. Die Dichtwirkung ist zusätzlich verbessert.

Ein verschiebbarer Boden, der entlang der Behälter-Längsachse im Behälter abgedichtet angeordnet ist, ermöglicht eine vorteilhafte Abgabe eines Produkts aus der Behälter-Anordnung.

Das Dichtungselement dient zum Abdichten des Deckels am Behälter. Insbesondere wird eine, insbesondere ringförmige, Stirnfläche des Behälters mit dem Dichtungselement abgedichtet. Das Dichtungselement dichtet also insbesondere stirnflächig ab. Eine bezogen auf die Behälter-Längsachse radial orientierte Dichtfläche ist dadurch vermieden. Die Stirnfläche weist insbesondere eine Flächennormale auf, die parallel zur Behälter-Längsachse orientiert ist. Das Dichtungselement ist flexibel deformierbar ausgeführt. Das Dichtungsmaterial, aus dem das Dichtungselement hergestellt ist, ist insbesondere elastisch. Das Dichtungselement ist insbesondere derart zwischen Behälter und damit verbundenem Deckel angeordnet, dass eine zuverlässige Abdichtung gewährleistet ist. Bei zusätzlicher Erhöhung des Innendrucks in einem von der Behälter-Anordnung abgeschlossenen Innenraum kann sich das Dichtungselement infolge des Innendrucks zusätzlich an den Behälter und/oder den Deckel anschmiegen und die Dichtwirkung zusätzlich erhöhen. Die Behälter-Anordnung eignet sich insbesondere zur Zubereitung von kosmetischen und/oder pharmazeutischen Massen, da bei einem dafür erforderlichen Rührprozess ein Lufteinschluss zuverlässig ausgeschlossen werden kann.

Bei verbundenem Deckel ist die Stirnfläche des Behälters innerhalb der Nut angeordnet.

Bei einer Behälter-Anordnung, bei der der Behälter im Bereich der Nut durch einen Radialspalt beabstandet von dem Deckel angeordnet, ist gewährleistet, dass die Dichtwirkung ausschließlich durch das Dichtungselement erfolgt. Eine unmittelbare Kontaktfläche zwischen Deckel und Behälter existiert nicht. Dadurch ist eine Kontaktfläche zwischen zwei vergleichsweise harten Kontaktpartnern ausgeschlossen, die sich infolge eines erhöhten Behälterinnendrucks öffnen könnte.

Ein separates Dichtungselement gemäß Anspruch 4 vereinfacht die Herstellung der Behälter-Anordnung. Das Dichtungselement kann insbesondere als O-Ring ausgeführt sein, der in die Nut des Deckels eingelegt wird. Das Dichtungselement ist insbesondere als standardisiertes Element in großen Mengen und Kosten günstig verfügbar. Das separate Dichtungselement kann auch als Flachdichtring ausgeführt sein.

Alternativ ist es möglich, das Dichtungselement einstückig, insbesondere durch Zwei-Komponenten-Spritzguss am Deckel oder am Behälter anzuformen. Beispielsweise kann ein Silikonring durch Zwei-Komponenten-Spritzgusstechnik einteilig am Deckel aus einem thermoplastischen Kunststoff, insbesondere Polyethylen und/oder Polypropylen, angeformt sein.

Eine Anordnung des Dichtungselements gemäß Anspruch 5 gewährleistet, dass der Innenraum der Behälter-Anordnung bereits durch das Aufsetzen des Deckels auf den Behälter zuverlässig abgedichtet ist. Die Handhabung der Behälter-Anordnung ist fehlerunanfällig. Insbesondere sind das Dichtungselement und/oder die Gewindeverbindung von Behälter und Deckel derart ausgeführt, dass ein manuelles Aufschrauben des Deckels auf den Behälter eine zuverlässige Abdichtung der Behälter-Anordnung gewährleistet.

Bei einer Behälter-Anordnung gemäß Anspruch 6 ist die Dichtwirkung zusätzlich erhöht.

Ein Behälter gemäß Anspruch 7 eignet sich insbesondere zur Herstellung von kosmetischen und/oder pharmazeutischen Produkten, wie Salben oder Cremes.

Ein Dichtungsmaterial gemäß Anspruch 8 ermöglicht eine besonders vorteilhafte Abdichtung des Deckels am Behälter.

Ein zentrischer Stutzen gemäß Anspruch 10 verbessert einerseits die dosierte Abgabe des Produkts aus der Behälter-Anordnung. Andererseits kann der Stutzen als Zugang für ein Rührwerkzeug dienen, um das Produkt in der Behälter-Anordnung zuzubereiten.

Ein Ausführungsbeispiel der Erfindung wird nachfolgend anhand der Zeichnung näher erläutert. In dieser zeigen:
- Fig. 1: eine perspektivische Darstellung einer erfindungsgemäßen Behälter-Anordnung,
- Fig. 2: einen Längsschnitt gemäß Schnittlinie II-II in Fig. 1,
- Fig. 3: eine vergrößerte Detaildarstellung des Details III in Fig. 2.

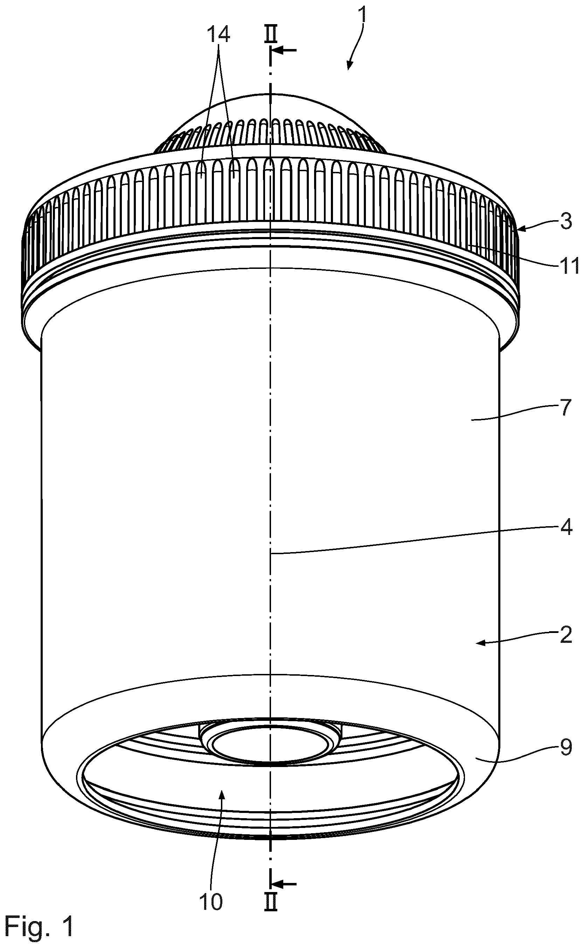

Die in Fig. 1 bis 3 als Ganzes mit 1 bezeichnete Behälter-Anordnung ist als Kruke ausgeführt. Als Kruke wird ein Vorrat- und Abgabegefäß bezeichnet, welches hauptsächlich für halbfeste Zubereitungen, wie Salben, Pasten oder Cremes verwendet wird. Besonders vorteilhaft ist, dass in der Kruke 1 die halbfeste Zubereitung, die insbesondere für kosmetische und/oder pharmazeutische Zwecke dient, auch unmittelbar zubereitet werden kann. Das Risiko von Verunreinigungen ist reduziert und insbesondere ausgeschlossen.

Die Behälter-Anordnung 1 umfasst einen Behälter 2, der mittels eines Deckels 3 verschließbar ist.

Der Behälter 2 ist im Wesentlichen hohlzylindrisch ausgeführt und weist eine Behälter-Längsachse 4 auf. Der Behälter 2 ist als einstückiges Formteil, insbesondere durch Kunststoff-Spritzguss, insbesondere aus einem thermoplastischen Kunststoff, insbesondere aus Polypropylen, hergestellt.

Der Behälter 2 ist aus einem thermoplastischen Kunststoff, insbesondere aus Polypropylen, hergestellt. Die Härte des Behältermaterials beträgt zwischen Shore D 50 bis Shore D 90, insbesondere Shore D 60 bis Shore D 80 und insbesondere Shore D 65 bis Shore D 75.

Der Behälter 2 weist eine bezüglich der Behälter-Längsachse 4 rotationssymmetrische Innenfläche 5 auf. Die Innenfläche 5 ist als Mantelwand eines Kreiszylinders ausgeführt. Die Außenkontur des Behälters 2 kann im Wesentlichen frei gestaltet und insbesondere nicht-rotationssymmetrisch ausgeführt sein.

An einem ersten Ende entlang der Behälter-Längsachse 4 weist der Behälter 2 eine Behälter-Öffnung 6 auf, die durch den Deckel 3 verschlossen ist. Im Bereich der Behälter-Öffnung 6 ist an der Außenseite 7 des Behälters 2 ein Behälter-Verbindungselement 8 in Form eines Gewindes einstückig angeformt. Das Behälter-Verbindungselement 8 ist ein Außen-Gewinde. Gemäß dem gezeigten Ausführungsbeispiel ist das Behälter-Verbindungselement 8 ein dreigängiges Trapezgewinde.

Im Bereich der Behälter-Öffnung 6 weist der Behälter 2 an seiner Innenfläche 5 eine Fase 15 auf. Die Fase 15 bildet eine Einführschräge für den Deckel 3. Die Fase 15 erleichtert das Aufsetzen und Aufschrauben des Deckels 3 auf dem Behälter 2. Der Behälter 2 weist an dem ersten Ende im Bereich der Behälter-Öffnung 6 eine ringflächenförmige Stirnfläche 16 auf.

An einem zweiten, dem ersten Ende entlang der Behälter-Längsachse 4 gegenüberliegenden Ende weist der Behälter 2 eine im Wesentlichen ringflächenförmige Abstellfläche 9 auf, mit der der Behälter 2 definiert auf einer Unterlage abgestellt werden. Die Abstellfläche 9 ist als Abrundung der Zylindermantelwand des Behälters 2 ausgeführt. Die Abstellfläche 9 weist eine zentrische Öffnung 10 auf.

Der Deckel 3 weist einen im Wesentlichen kreiszylindrischen Bund 11 und eine Deckelplatte 12 auf. Der Bund 11 umgreift den Behälter 2 im Bereich der Behälter-Öffnung 6. An einer Innenseite des Bundes 11 ist ein Deckel-Verbindungselement 13 in Form eines Innen-Gewindes ausgeführt, das mit dem Außen-Gewinde des Behälters 2 korrespondiert. Das Deckel-Verbindungselement 13 ist als dreigängiges Trapezgewinde ausgeführt.

Der Deckel 3 ist aus einem thermoplastischen Kunststoff, insbesondere aus Polypropylen, hergestellt. Die Härte des Deckelmaterials beträgt zwischen Shore D 50 bis Shore D 90, insbesondere Shore D 60 bis Shore D 80 und insbesondere Shore D 65 bis Shore D 75.

An einer Außenseite des Bundes 11 sind Greifrillen 14 vorgesehen, um das Öffnen der Behälter-Anordnung, also das Aufschrauben der Gewindeverbindung zwischen Behälter 2 und Deckel 3, zu erleichtern. Die Greifrillen 14 sind als Erhebungen an der Außenseite des Bundes 11 ausgeführt. Die Greifrillen 14 erstrecken sich entlang der Behälter-Längsachse 4. Die Greifrillen 14 sind entlang des äußeren Umfangs des Bundes 11 angeordnet.

Die Deckelplatte 12, die insbesondere einstückig mit dem Bund 11 verbunden ist, erstreckt sich im Wesentlichen über die Behälter-Öffnung 6. Die Deckelplatte 12 deckt die Behälter-Öffnung 6 zu.

In radialer Richtung bezogen auf die Behälter-Längsachse 4 ist zwischen dem Bund 11 und der Deckelplatte 12 eine Rechtecknut 17 in dem Deckel 3 vorgesehen. Die Rechtecknut 17 weist eine Nutbreite B_{N} und eine Nuttiefe T_{N} auf. Die Nuttiefe T_{N} ist parallel zur Behälter-Längsachse 4 orientiert. Die Nutbreite B_{N} ist radial zur Behälter-Längsachse orientiert. In dem verschlossenen Zustand der Behälter-Anordnung 1 ragt der Behälter 2 mit der Stirnfläche 16 in die Nut 17 hinein. Dadurch wird eine reduzierte Nuttiefe T_{N,red} festgelegt.

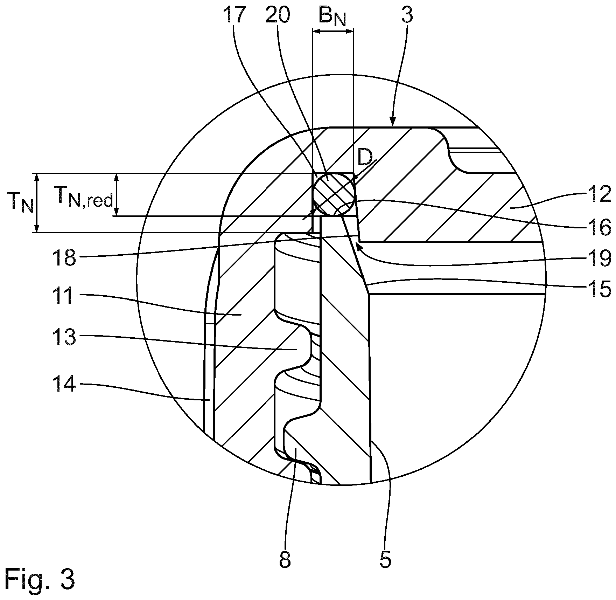

Wie in Fig. 3 gezeigt, ist die Nut 17 nicht ideal rechteckförmig. Insbesondere die innere Seitenflanke 18 der Nut 17 ist gegenüber der Behälter-Längsachse 4 geneigt angeordnet. Dadurch ergibt sich ein konisch verjüngender Verlauf für die Nut 17.

Der Deckel 3, insbesondere die Deckelplatte 12, ist in dem verschlossenen Zustand der Behälter-Anordnung 1 von dem Behälter 2, insbesondere im Bereich der Nut 17 und insbesondere im Bereich der Fase 15 durch einen Radialspalt 19 beabstandet angeordnet. Zwischen dem Behälter 2 und dem Deckel 3 existiert - mit Ausnahme der Gewindeverbindung 8, 13 - keine unmittelbare Kontaktfläche.

In die Nut 17 ist ein Dichtungselement 20 in Form eines O-Rings eingelegt. Das Dichtungselement 20 weist eine kreisförmige Querschnittsfläche mit einem Durchmesser D auf, der einer Dicke D_{D} des Dichtungselements 20 und einer Höhe H_{D} des Dichtungselements 20 entspricht. Die Dicke D_{D} ist radial zur Behälter-Längsachse 4 orientiert. Die Höhe H_{D} ist parallel zur Behälter-Längsachse 4 orientiert. Es sind auch andere geometrische Ausgestaltungen des Dichtungselements 20 möglich, wie insbesondere ein Flachdichtring, der eine rechteckförmige Querschnittsfläche aufweist.

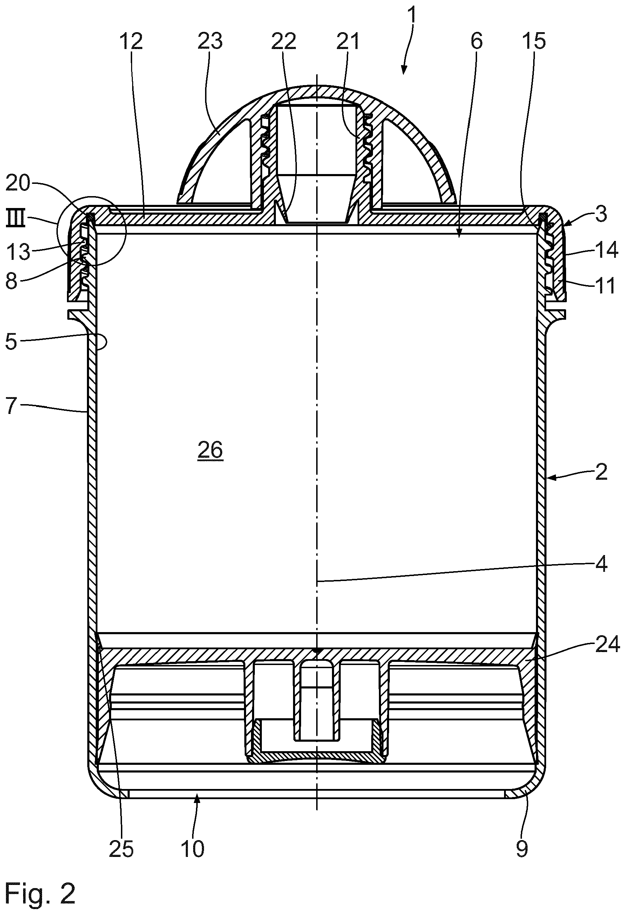

In der Darstellung gemäß Fig. 2 und 3 der Behälter-Anordnung 1, bei der der Deckel 3 auf dem Behälter 2 aufgesetzt ist, ist das Dichtungselement 20 vorgespannt in der Nut 17 angeordnet. Die Vorspannung ergibt sich daraus, dass das Dichtungselement 20 in der Nut 17 deformiert angeordnet ist. Eine Deformation ergibt sich daraus, dass die Nutbreite B_{N} kleiner ist als Dicke D_{D} des Dichtungselements 20. Das bedeutet, dass das Dichtungselement 20 in der Nut 17 in radialer Richtung bezogen auf die Behälter-Längsachse vorgespannt angeordnet ist.

Eine axiale Vorspannung des Dichtungselements 20 ergibt sich dadurch, dass die Stirnfläche 16 des Behälters 2 in die Nut 17 soweit vorsteht, dass die reduzierte Nuttiefe T_{N,red} kleiner ist als die Höhe H_{D} des Dichtungselements 20. Durch das Zusammenwirken der Gewindegänge von Behälter-Verbindungselement 8 und Deckel-Verbindungselement 13 wird die Stirnfläche 16 in die Nut 17 und insbesondere gegen das Dichtungselement 20 gepresst.

Das Dichtungselement 20 weist ein Dichtungsmaterial auf mit einer Härte zwischen Shore A 30 bis Shore A 60. Der Deckel 3 weist einen zentrischen Stutzen 21 auf, an dem eine der Behälter-Öffnung 6 zugewandte, umlaufende Dichtungslippe 22 vorgesehen ist. An dem Stutzen 21 ist ein Außen-gewinde vorgesehen, auf das eine Kappe 23 aufschraubbar ist. Die Kappe 23 ist kugelkalottenförmig ausgeführt. Die Kappe 23 ist abgedichtet am Stutzen 21 angeordnet. Durch die Kappe 23 ist der Deckel 3 insgesamt dicht ausgeführt.

In dem Behälter 2 ist ein Boden 24 angeordnet, der an der Innenfläche 5 des Behälters 2 mittels einer integrierten Boden-Dichtlippe 25 abgedichtet angeordnet ist. Der Boden 24 ist im Wesentlichen zylinderscheibenförmig ausgeführt und entlang der Behälter-Längsachse 4 verschiebbar in dem Behälter 2 angeordnet. Über die Öffnung 10 ist der Boden 24 von außerhalb der Behälter-Anordnung handhabbar. Der Boden 24 kann manuell oder mittels eines Hilfsmittels entlang der Behälter-Längsachse 4 verschoben werden.

Der Behälter 2, der Deckel 3 und der Boden 24 begrenzen einen im Wesentlichen zylinderförmigen Innenraum 26 der Behälter-Anordnung 1. Der Innenraum 26 ist abgedichtet verschließbar.

Es wurden Versuche zur Prüfung der Dichtheit mit der Behälter-Anordnung 1 und einer entsprechenden Behälter-Anordnung der WO 02/087 986 A1 durchgeführt. Die Prüfung erfolgte nach Vorgaben einer SPC-Prüfung. Der Innenraum 26 wurde mit Wasser befüllt und mit einer Testkraft der Boden 24 entlang der Behälter-Längsachse 4 in Richtung des Deckels 3 gedrückt. Die Druckkraft wurde gemessen. Als Kennwert für die Dichtheit der Behälter-Anordnung 1 dient die Kraft, bei der Wasser aus dem Innenraum 26 austritt. Diese Druckkraft betrug für den erfindungsgemäßen Behälter 2 mit einem Fassungsvermögen von 100 ml 18 kg. Die Druckkraft bei einem volumengleichen Behälter gemäß dem Stand der Technik betrug 5 kg.

## Patentansprüche

1. Verschließbare Behälter-Anordnung mit
a. einem ein Behältermaterial aufweisenden Behälter (2) mit einer Behälter-Längsachse (4) und mit einem Behälter-Verbindungselement (8),
b. einem ein Deckelmaterial aufweisenden Deckel (3), der
i. mit dem Behälter (2) verbindbar ist,
ii. ein mit dem Behälter-Verbindungselement (8) korrespondierendes Deckel-Verbindungselement (13) aufweist,
iii. einen Bund (11) und eine einstückig damit verbundene Deckelplatte (12) aufweist,
iv. eine umlaufende Nut (17) aufweist, die eine innere Seitenflanke (18) aufweist, die gegenüber der Behälter-Längsachse (4) geneigt angeordnet ist,
c. einem ein Dichtungsmaterial aufweisendes Dichtungselement (20) zum Abdichten des Deckels (3) am Behälter (2), wobei
d. das Dichtungsmaterial eine Härte aufweist, die kleiner ist als die Härte des Behältermaterials und/oder kleiner ist als die Härte des Deckelmaterials,
e. in der Nut (17) das Dichtungselement (20) unverlierbar angeordnet ist, wobei die Nut (17) eine Nutbreite (B_{N}) aufweist, die kleiner oder gleich einer Dicke (D_{D}) des Dichtungselements (20) ist,
f. der Behälter (2) im Bereich einer Behälter-Öffnung (6) eine ringflächenförmige Stirnfläche (16) aufweist,
g. die Stirnfläche (16) des Behälters (2) bei verbundenem Deckel (3) innerhalb der Nut (17) angeordnet ist,
**dadurch gekennzeichnet, dass**
h. die Behälter-Anordnung mit einem entlang der Behälter-Längsachse (4) im Behälter (2) abgedichtet verschiebbaren Boden (24) vorgesehen ist,
i. der Behälter (2) im Bereich der Nut (17) durch einen Radialspalt (19) beabstandet von dem Deckel (3) in einem verschlossenen Zustand der Behälter-Anordnung (1) angeordnet ist,
j. der Behälter (2) an seiner Innenfläche (5) eine Fase (15) aufweist, wobei die Fase (15) und die innere Seitenflanke (18) den Radialspalt (19) definieren.

2. Behälter-Anordnung gemäß Anspruch 1, **dadurch gekennzeichnet, dass** gilt: B_{N} ≤ 0,98 · D_{D}.

3. Behälter-Anordnung gemäß Anspruch 1 oder 2, **dadurch gekennzeichnet, dass** die Nut (17) eine Nuttiefe (T_{N}) aufweist, die größer ist als eine Höhe (H_{D}) des Dichtungselements (20) ist, wobei insbesondere gilt: T_{N} > 1,05 · H_{D}.

4. Behälter-Anordnung gemäß einem der vorstehenden Ansprüche,
**dadurch gekennzeichnet, dass** das Dichtungselement (20) als separates Element, insbesondere in Form eines O-Rings ausgeführt ist.

5. Behälter-Anordnung gemäß einem der vorstehenden Ansprüche,
**dadurch gekennzeichnet, dass** das Dichtungselement (20) in der Nut (17) vorgespannt, insbesondere in axialer Richtung bezüglich zur Behälter-Längsachse, angeordnet ist.

6. Behälter-Anordnung gemäß einem der vorstehenden Ansprüche,
**dadurch gekennzeichnet, dass** bei verbundenem Deckel die Stirnfläche (16) eine reduzierte Nuttiefe (T_{N,red}) definiert, die kleiner ist als die Höhe (H_{D}) des Dichtungselements (20), wobei insbesondere gilt: T_{N,red} < 0,95 · H_{D}.

7. Behälter-Anordnung gemäß einem der vorstehenden Ansprüche,
**dadurch gekennzeichnet, dass** der Behälter (2) eine rotationssymmetrische Innenfläche (5) aufweist.

8. Behälter-Anordnung gemäß einem der vorstehenden Ansprüche,
**dadurch gekennzeichnet, dass** das Dichtungsmaterial eine Härte zwischen Shore A 15 bis Shore A 95, insbesondere zwischen Shore A 20 bis Shore A 90, und insbesondere zwischen Shore A 30 bis Shore A 60 aufweist.

9. Behälter-Anordnung gemäß einem der vorstehenden Ansprüche,
**dadurch gekennzeichnet, dass** die Behälter-Anordnung (1) als Kruke ausgeführt ist.

10. Behälter-Anordnung gemäß einem der vorstehenden Ansprüche,
**dadurch gekennzeichnet, dass** der Deckel (3) einen zentrischen Stutzen (21) aufweist, der mittels einer Kappe (23) abgedichtet verschließbar ist.

## Claims

1. Sealable container arrangement having
a. a container (2) which comprises a container material and has a container longitudinal axis (4) and a container connecting element (8),
b. a lid (3) which comprises a lid material and
i. is connectable to the container (2) and
ii. comprises a lid connecting element (13) which corresponds to the container connecting element (8),
iii. comprises a collar (11) and a cover plate (12) which is connected in one piece to the collar (11),
iv. comprises a circumferential groove (17) comprising an inner side flank (18) arranged in an inclined manner in relation to the container longitudinal axis (4),
c. a sealing element (20), which comprises a sealing material, for sealing the lid (3) on the container (2),
wherein
d. the sealing material comprises a hardness which is less than the hardness of the container material and/or is less than the hardness of the lid material
e. the sealing element (20) is arranged in a captive manner in the groove (17), wherein the groove (17) comprises a groove width (B_{N}) which is smaller than or equal to a thickness (D_{D}) of the sealing element (20),
f. the container (2) comprises a ring-face-shaped end face (16) in the region of the container opening (6),
g. with the lid (3) connected, the end face (16) of the container (2) is arranged inside the groove (17),
**characterized in that**
h the container arrangement is provided with a displaceable bottom (24) which is arranged in a sealed manner along the container longitudinal axis (4) in the container (2),
i. the container (2) is arranged at a spacing from the lid (3), as a result of a radial gap (19), in the region of the groove (17), with the container arrangement (1) in the closed state,
j. the container (2) comprises a chamfer (5) on its inside surface (5), wherein the chamfer (15) and the inner side flank (18) define the radial gap (19).

2. Container arrangement according to Claim 1, **characterized in that** B_{N} ≤ 0.98 · D_{D} applies.

3. Container arrangement according to Claim 1 or 2, **characterized in that** the groove (17) comprises a groove depth (T_{N}) which is greater than a height (H_{D}) of the sealing element (20), wherein T_{N} > 1.05 · H_{D} applies in particular.

4. Container arrangement according to one of the preceding claims, **characterized in that** the sealing element (20) is realized as a separate element, in particular in the form of an O-ring.

5. Container arrangement according to one of the preceding claims, **characterized in that** the sealing element (20) is arranged in the groove (17) in a pre-stressed manner, in particular in the axial direction with reference to the container longitudinal axis.

6. Container arrangement according to one of the preceding claims, **characterized in that,** with the lid connected, the end face (16) defines a reduced groove depth (T_{N,red}) which is smaller than the height (H_{D}) of the sealing element (20), wherein T_{N,red} < 0.95 · H_{D} applies in particular.

7. Container arrangement according to one of the preceding claims, **characterized in that** the container (2) comprises a rotationally symmetrical inside surface (5).

8. Container arrangement according to one of the preceding claims, **characterized in that** the sealing material comprises a hardness of between Shore A 15 and Shore A 95, in particular between Shore A 20 and Shore A 90, and in particular between Shore A 30 and Shore A 60.

9. Container arrangement according to one of the preceding claims, **characterized in that** the container arrangement (1) is designed as a pot.

10. Container arrangement according to one of the preceding claims, **characterized in that** the lid (3) comprises a central spout (21) which is closable in a sealed manner by means of a cap (23).

## Revendications

1. Agencement de récipient refermable avec
a. un récipient (2) présentant un matériau de récipient avec un axe longitudinal de récipient (4) et avec un élément de liaison de récipient (8),
b. un couvercle (3) présentant un matériau de couvercle qui
i. peut être relié au récipient (2),
ii. présente un élément de liaison de couvercle (13) correspondant à l'élément de liaison de récipient (8),
iii. présente un collet (11) et une plaque de couvercle (12) reliée à celui-ci d'un seul tenant,
iv. présente un écrou tournant (17) qui présente un flanc latéral (18) intérieur qui est agencé de manière inclinée par rapport à l'axe longitudinal de récipient (4),
c. un élément de garniture (20) présentant un matériau de garniture pour rendre étanche le couvercle (3) au niveau du récipient (2),
dans lequel
d. le matériau de garniture présente une dureté qui est inférieure à la dureté du matériau de récipient et/ou est inférieur à la dureté du matériau de couvercle,
e. dans l'écrou (17) l'élément de garniture (20) est agencé de manière imperdable, dans lequel l'écrou (17) présente une largeur d'écrou (B_{N}) qui est inférieure ou égale à une épaisseur (D_{D}) de l'élément de garniture (20),
f. le récipient (2) présente dans la zone d'une ouverture de récipient (6) une surface avant (16) en forme de surface annulaire,
g. la surface avant (16) du récipient (2) est agencée en cas de couvercle (3) relié à l'intérieur de l'écrou (17),
**caractérisé en ce que**
h. l'agencement de récipient est prévu avec un fond (24) mobile rendu étanche le long de l'axe longitudinal de récipient (4) dans le récipient (2),
i. le récipient (2) est agencé dans la zone de l'écrou (17) par une fente radiale (19) à distance du couvercle (3) dans un état fermé de l'agencement de récipient (1),
j. le récipient (2) présente au niveau de sa surface inférieure (5) un chanfrein (15), dans lequel le chanfrein (15) et le flanc latéral (18) intérieur définissent la fente radiale (19).

2. Agencement de récipient selon la revendication 1, **caractérisé en ce qu'**il vaut : B_{N} ≤ 0,98 · D_{D}.

3. Agencement de récipient selon la revendication 1 ou 2, **caractérisé en ce que** l'écrou (17) présente une profondeur d'écrou (T_{N}) qui est supérieure à une hauteur (H_{D}) de l'élément de garniture (20), dans lequel il vaut en particulier : T_{N} > 1,05 · H_{D}.

4. Agencement de récipient selon l'une des revendications précédentes, **caractérisé en ce que** l'élément de garniture (20) est réalisé comme élément séparé, en particulier sous la forme d'un joint torique.

5. Agencement de récipient selon l'une des revendications précédentes, **caractérisé en ce que** l'élément de garniture (20) est précontraint dans l'écrou (17), en particulier est agencé dans le sens axial par rapport à l'axe longitudinal de récipient.

6. Agencement de récipient selon l'une des revendications précédentes, **caractérisé en ce qu'**en cas de couvercle relié la surface avant (16) définit une profondeur d'écrou (T_{N,red}) réduite qui est inférieure à la hauteur (H_{D}) de l'élément de garniture (20), dans lequel il vaut en particulier : T_{N,red} < 0,95 · H_{D}.

7. Agencement de récipient selon l'une des revendications précédentes, **caractérisé en ce que** le récipient (2) présente une surface intérieure (5) symétrique en rotation.

8. Agencement de récipient selon l'une des revendications précédentes, **caractérisé en ce que** le matériau de garniture présente une dureté entre 15 Shore A et 95 Shore A, en particulier entre 20 Shore A et 90 Shore A, et en particulier entre 30 Shore A et 60 Shore A.

9. Agencement de récipient selon l'une des revendications précédentes, **caractérisé en ce que** l'agencement de récipient (1) est réalisé comme un bocal.

10. Agencement de récipient selon l'une des revendications précédentes, **caractérisé en ce que** le couvercle (3) présente une tubulure centrale (21) qui est refermable de manière étanche au moyen d'un clapet (23).
